# FASCICULE DE BREVET EUROPEEN

(11) **EP 2 214 397 B1**
(45) Date de publication et mention de la délivrance du brevet: **21.12.2011**
(21) Numéro de dépôt: 10152081.5
(22) Date de dépôt: 29.01.2010
(51) Int. Cl.: H04N 5/335

(54) **Circuit d'acquisition comportant un condensateur tampon**
Erfassungsschaltung mit Pufferkondensator
Data acquisition circuitry using a buffer capacitor

(30) Priorité: 30.01.2009 FR 0900395
(43) Date de publication de la demande: 04.08.2010
(73) Titulaire: Société Française de Détecteurs Infrarouges - SOFRADIR, 92290 Châtenay Malabry (FR)
(72) Inventeur: Decaens, Gilbert, 38000 Grenoble (FR)
(74) Mandataire: de Jong, Jean Jacques

(56) Documents cités:
- US-A1- 2003 011 694
- US-A1- 2007 045 514
- US-A1- 2008 048 100
- US-A1- 2008 079 830

## Description

### Domaine technique de l'invention

L'invention est relative à un circuit d'acquisition.

### État de la technique

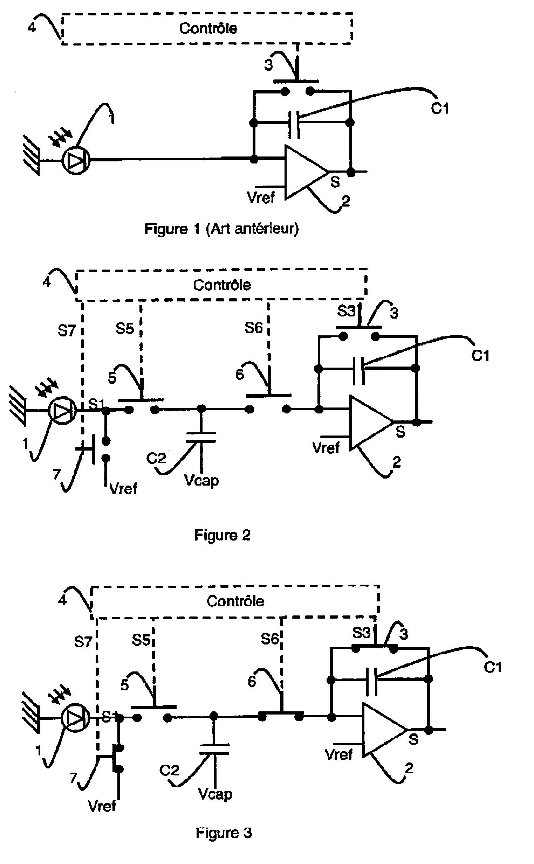

De manière conventionnelle, dans le domaine de l'imagerie, l'acquisition d'une scène est réalisée par une matrice de pixels intégrateurs. Comme illustré à la figure 1, un pixel intégrateur comporte un circuit d'acquisition qui comporte un photodétecteur 1 connecté à une première borne d'entrée d'un amplificateur 2. Une tension de référence Vref est appliquée à une seconde borne d'entrée de l'amplificateur 2. Un condensateur C1 d'intégration est connecté entre la première borne d'entrée de l'amplificateur 2 et une borne de sortie S de l'amplificateur 2. Un premier interrupteur électronique 3 est connecté en parallèle aux bornes du condensateur d'intégration C1, c'est-à-dire entre la première borne d'entrée et la borne de sortie S de l'amplificateur 2. Le premier interrupteur électronique 3 est connecté à un circuit de commande 4 qui commande l'ouverture et/ou la fermeture de l'interrupteur 3.

De cette manière, le photodétecteur 1 délivre un courant qui charge le condensateur d'intégration C1 et la tension aux bornes du condensateur C1 est utilisée par la suite pour quantifier l'intensité lumineuse de la scène observée par le photodétecteur 1.

De manière classique, le premier interrupteur électronique 3 est utilisé pour remettre à zéro la tension aux bornes de la capacité d'intégration C1. Ainsi, lorsque le premier interrupteur est fermé, les deux bornes de la capacité C1 sont court-circuitées et la capacité C1 est initialisée et opérationnelle pour une nouvelle phase de charge.

Cependant, cette architecture simple présente de nombreux inconvénients. Cette architecture ne peut pas être utilisée dans les domaines de l'imagerie active. En effet, dans ce cas, le photodétecteur 1 émet un courant intense, mais pendant une durée très courte, typiquement inférieure à 20ns. Avec ce genre de problématique, il est nécessaire de fournir une quantité importante d'énergie au circuit pour que celui-ci soit en mesure de réaliser l'acquisition des données sur une fenêtre très courte, tout en garantissant une parfaite mesure du flux lumineux émis par la scène observée (bruit, linéarité).

<*>=<Le document D1: US-A-2008/0048100, décrit aussi un circuit où des photodétecteurs sont connectés à un amplificateur transimpédance capacitif mais où sa polarisation est imposée au moyen du dit amplificateur.>

### Objet de l'invention

L'invention a pour objet la réalisation d'un circuit d'acquisition d'image qui soit facile à mettre en oeuvre et qui permette à la fois l'acquisition de scènes très courtes avec une très bonne précision de mesure, tout en autorisant son utilisation dans un dispositif embarqué où l'énergie disponible est limitée.

Le circuit et le procédé correspondant selon l'invention sont caractérisés par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un circuit selon l'art antérieur,
- la figure 2 représente, de manière schématique, un circuit selon l'invention,
- les figures 3, 4 et 5 représentent, de manière schématique, un premier mode de fonctionnement d'un circuit selon l'invention à différentes périodes de l'acquisition de données,
- les figures 6a-6e représentent des chronogrammes des signaux représentatifs des ouvertures et fermetures des différents interrupteurs électroniques et de l'émission de courant par le photodétecteur correspondant aux figures 3 à 5, selon l'invention,
- les figures 7, 8, 9 et 10 représentent, de manière schématique, un second mode de fonctionnement d'un circuit, selon l'invention, à différentes périodes de l'acquisition de données,
- la figure 11 représente, de manière schématique, un troisième mode de fonctionnement d'un circuit, selon l'invention,
- les figures 12a-12g représentent des chronogrammes des signaux représentatifs des ouvertures et fermetures des différents interrupteurs électroniques et de l'émission de courant par le photodétecteur correspondant à la figure 11, selon l'invention,
- les figures 13a-13e représentent des chronogrammes des signaux représentatifs des ouvertures et fermetures des différents interrupteurs électroniques et de l'émission de courant par le photodétecteur, d'un troisième mode de fonctionnement du circuit illustré à la figure 2,
- les figures 14a-14e et 15a-15e représentent des chronogrammes des signaux représentatifs des ouvertures et fermetures des différents interrupteurs électroniques et de l'émission de courant par le photodétecteur, respectivement d'un quatrième et d'un cinquième modes de fonctionnement du circuit illustré à la figure 2.

### Description de modes de réalisations préférentiels de l'invention

Comme illustré à la figure 2, le circuit d'acquisition comporte un photodétecteur 1 relié électriquement à une première borne d'entrée d'un amplificateur 2. Une tension de référence Vref est appliquée à une seconde borne d'entrée de l'amplificateur 2.

Un condensateur C1 d'intégration est connecté entre la première borne d'entrée de l'amplificateur 2 et une borne de sortie S de l'amplificateur 2. Un premier interrupteur électronique 3 est connectée en parallèle aux bornes de la capacité d'intégration C1, c'est-à-dire entre la première borne d'entrée et la borne de sortie de l'amplificateur 2. Le condensateur C1 d'intégration et le premier interrupteur électronique 3 sont donc connectés en parallèle entre la première borne d'entrée et la borne de sortie S de l'amplificateur 2.

Des second 5 et troisième 6 interrupteurs électroniques sont connectés en série entre le photodétecteur 1 et la première borne d'entrée de l'amplificateur 2. Ainsi, une première borne du second interrupteur 5 est connectée à une borne de sortie du photodétecteur 1. Une seconde borne du second interrupteur électronique 5 est connectée à une première borne d'entrée du troisième interrupteur électronique 6. Une seconde borne du troisième interrupteur électronique 6 est connectée à la première borne d'entrée de l'amplificateur 2

Une première borne d'un quatrième interrupteur électronique 7 est connectée à une borne commune entre le photodétecteur 1 et le second interrupteur électronique 5. La tension de référence Vref est appliquée à une seconde borne du quatrième interrupteur électronique 7. Ainsi, la tension de référence Vref est appliquée entre le photodétecteur 1 et le second interrupteur électronique 5 par l'intermédiaire du quatrième interrupteur électronique 7. De cette manière, une polarisation adéquate est imposée aux bornes du photodétecteur 1 par l'intermédiaire du quatrième interrupteur électronique 7.

A titre d'exemple, le photodétecteur 1 est connecté à la masse, mais une tension particulière autre pourrait être appliquée au photodétecteur tant que la polarisation du photodétecteur est en adéquation avec son utilisation. Typiquement, la tension de référence est une tension positive, par exemple égale à 1,5V.

Le photodétecteur 1 transforme un rayonnement lumineux en un courant électrique. Il peut être réceptif, par exemple, au domaine visible du rayonnement électromagnétique ou au domaine des infrarouges. Le photodétecteur 1 peut être réalisé par tout dispositif adapté.

Une première borne d'un condensateur tampon C2 est connectée à la borne commune des second 5 et troisième 6 interrupteurs électroniques. Une tension secondaire Vcap est appliquée à la seconde borne du condensateur tampon C2. Par exemple, dans le cas d'une réalisation avec des interrupteurs à base de transistors MOS de type N et d'un condensateur tampon de type MOS, la tension secondaire Vcap est une tension du même signe que la tension de référence Vref et qui est plus importante en valeur absolue.

Le condensateur tampon C2 a une capacité électrique qui est au moins égale à celle du condensateur d'intégration C1. De préférence, le condensateur tampon C2 a une capacité électrique qui est comprise entre deux et dix fois la capacité électrique du condensateur d'intégration C1. Avantageusement, le condensateur tampon C2 a une capacité électrique qui est cinq fois plus grande que la capacité électrique du condensateur d'intégration C1.

Lors de la charge du condensateur tampon C2 par le courant électrique émis par le photodétecteur 1, il y a apparition d'une différence de potentiel aux bornes du condensateur tampon C2. Cette différence de potentiel entraîne une modification de la polarisation aux bornes du photodétecteur 1, de ce fait, la valeur de la capacité électrique du condensateur C2 est choisie pour limiter la dépolarisation du photodétecteur 1. De manière analogue, la valeur de capacité électrique du condensateur C1 est choisie pour sa dynamique de mesure. La tension aux bornes du condensateur C1 est avantageusement comprise dans une gamme prédéterminée lorsque le photodétecteur 1 émet une quantité de charge typique.

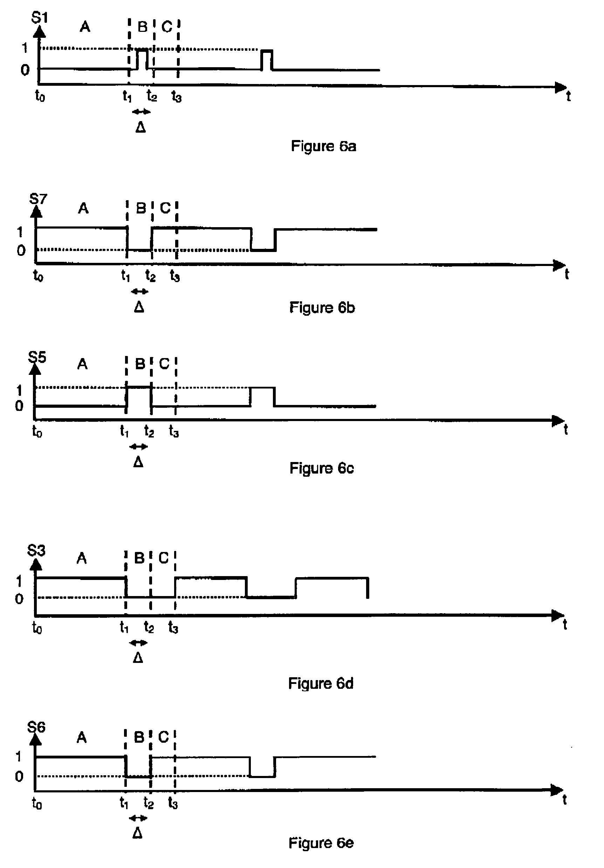

Les premier 3, second 5, troisième 6 et quatrième 7 interrupteurs électroniques sont connectés à un circuit de commande 4 qui commande l'ouverture et/ou la fermeture de ces interrupteurs de façon indépendante. Le circuit de commande émet des signaux S3, S5, S6 et S7 respectivement associés aux premier 3, second 5, troisième 6 et quatrième 7 interrupteurs électroniques afin de commander leur ouverture et leur fermeture. Ces signaux sont illustrés sur les chronogrammes des figures 6, 12, 13, 14 et 15. De manière analogue, le courant émis par le photodétecteur 1 est représenté, schématiquement, par un signal S1 qui indique la période durant laquelle le photodétecteur 1 peut émettre un courant représentatif de la scène observée. Ce signal S1, tel que représenté n'est pas représentatif de la durée réelle d'émission de courant ni de l'intensité délivrée (figures 6a, 12a, 13a, 14a et 15a).

Avec ce circuit d'acquisition, le courant émis par le photodétecteur 1 est accumulé rapidement par le condensateur tampon C2 qui, au moyen de sa capacité électrique plus importante, est capable d'emmagasiner tout le courant émis par le photodétecteur pendant une très courte période. Une fois chargé, le condensateur tampon C2 charge à son tour le condensateur d'intégration C1 qui présente une capacité électrique, avantageusement, plus faible et permet alors d'obtenir une différence de tension plus importante aux bornes de l'amplificateur 2.

Dans un premier mode de fonctionnement, illustré par les figures 3 à 6, les troisième 6 et quatrième 7 interrupteurs électroniques sont en opposition de phase avec le second interrupteur électronique 5, ce qui veut dire que lorsque le second interrupteur électronique 5 est ouvert, les troisième et quatrième interrupteurs électroniques 6 et 7 sont fermés et inversement. De plus, le basculement du premier interrupteur électronique 3 d'un état fermé à un état ouvert est avantageusement réalisé par rapport au même basculement du troisième interrupteur 6. Cependant, il faut nécessairement que la durée du premier interrupteur électronique 3 à l'état passant soit suffisante pour réaliser la réinitialisation du condensateur C1. Le premier interrupteur électronique 3 ayant pour but d'initialiser le condensateur C2, son basculement d'un état fermé à un état ouvert peut être indépendant de celui des autres interrupteurs électroniques.

Les figures 3 à 5 illustrent les différentes étapes de traitement lors de l'acquisition d'une scène par le photodétecteur. Les figures 6 représentent des chronogrammes d'ouverture et de fermeture des différents interrupteurs électronique du circuit et d'émission du photodétecteur. Le niveau 1 représente un interrupteur fermé donc passant alors que le niveau 0 représente un interrupteur ouvert donc bloqué.

Comme illustré aux figures 3 et 6, dans une première période A, entre des instants t₀ et t₁, les premier 3, troisième 6 et quatrième 7 interrupteurs électroniques sont fermés (figures 6d, 6e et 6b), ils autorisent donc le passage d'un courant, et le second 5 interrupteur électronique est ouvert, il ne laisse pas passer de courant. Le second interrupteur 5 étant ouvert, aucun courant ne circule depuis le photodétecteur 1 vers les condensateurs tampon C2 et d'intégration C1. Lors de cette phase, on initialise les condensateurs d'intégration C1 et tampon C2.

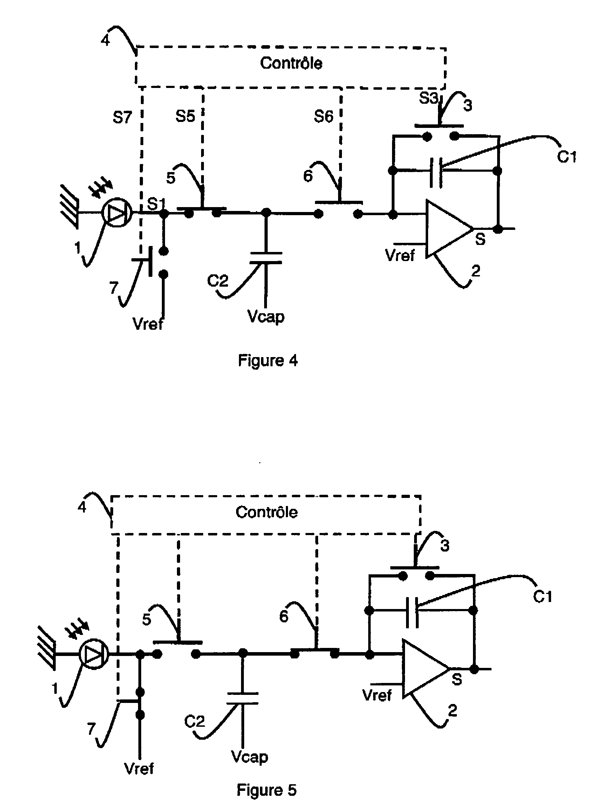

Comme illustré aux figures 4 et 6, dans une seconde période B, entre des instants t₁ et t₂, les états de tous les interrupteurs électroniques s'inversent, les premier 3, troisième 6 et quatrième 7 interrupteurs électroniques sont maintenant ouverts, donc bloquant et le second interrupteur électronique 5 est maintenant fermé donc passant (figure 6c). Durant cette seconde période B, pendant une durée Δ très courte, le photodétecteur 1 délivre un courant intense représentatif de la scène observée (figure 6a). Le second interrupteur 5 étant fermé, un courant circule alors du photodétecteur 1 vers le condensateur tampon C2 qui se charge.

Dans une variante de réalisation, le troisième interrupteur 6 peut rester à l'état fermé, le photodétecteur 1 charge alors également le condensateur d'intégration C1 directement ou par l'intermédiaire du condensateur tampon C2. En effet, les charges électriques accumulées dans le condensateur tampon C2 peuvent circuler jusqu'au condensateur d'intégration C1 qui se charge à son tour. Typiquement, la période entre t₁ et t₂ est inférieure à la microseconde et plus particulièrement comprise entre 50 et 100ns et la période pendant laquelle le photodétecteur 1 délivre un courant est inférieure ou égale à 20ns. Pendant cette courte durée, le photodétecteur 1 délivre un courant dont l'intensité est de l'ordre de quelques micro-ampères. Ainsi, le second interrupteur électronique 5 et le quatrième interrupteur électronique 7 sont respectivement fermés et ouverts simultanément, typiquement pendant une durée inférieure à une microseconde et plus particulièrement pendant une durée comprise entre 50 et 100ns.

Comme illustré aux figures 5 et 6, à l'instant t₂, et jusqu'à un instant t₃ représentant la fin de la troisième période C, le troisième interrupteur électronique 6 passe d'un état bloquant à un état passant. Ce changement d'état de l'interrupteur 6 permet une migration des charges du condensateur C2 vers le condensateur C1. Une fois le transfert des charges effectué depuis le condensateur C2 jusqu'au condensateur C1, la tension aux bornes du condensateur d'intégration C1 peut être mesurée par l'amplificateur 2. La mesure de la tension aux bornes du condensateur d'intégration C1 est réalisée à la fin de la seconde période C.

A l'instant t₃, le premier interrupteur électronique 3 change d'état pour revenir à l'état défini dans la période A et illustré à la figure 3 ce qui se traduit par la réalisation d'un court-circuit aux bornes du condensateur C1.

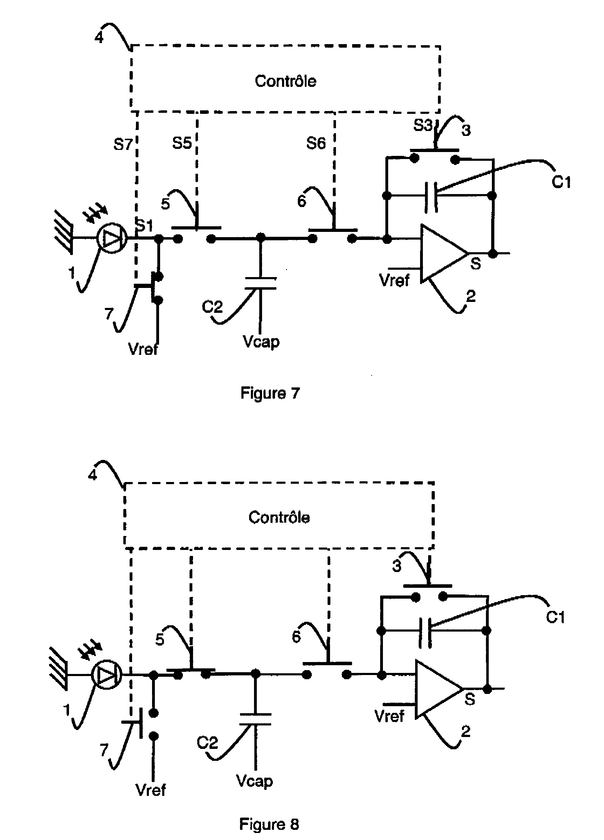

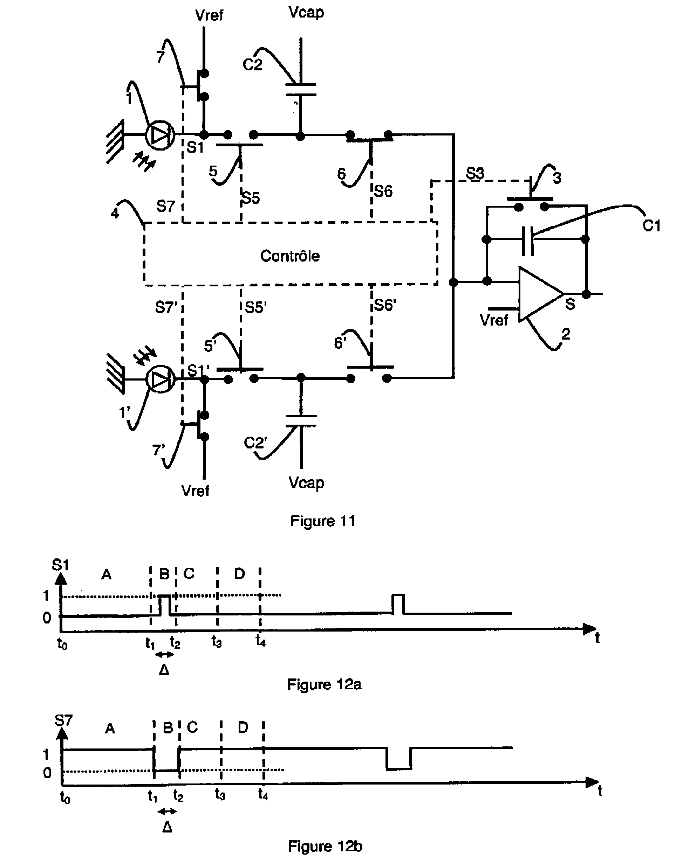

Dans un autre mode de fonctionnement, illustré aux figures 7 à 10 et à la figure 11 dans les périodes A à D, les phases d'ouverture et de fermeture du quatrième interrupteur électronique 7 permettent de réaliser la mutualisation du condensateur C1, du premier interrupteur électronique 3 et de l'amplificateur 2 pour une pluralité de pixels. De cette manière, ces trois éléments précités peuvent être associés à plusieurs photodétecteurs 1 qui sont eux-mêmes associés à leurs propres second 5, troisième 6 et quatrième 7 interrupteurs électroniques ainsi qu'à leur propre condensateur tampon C2.

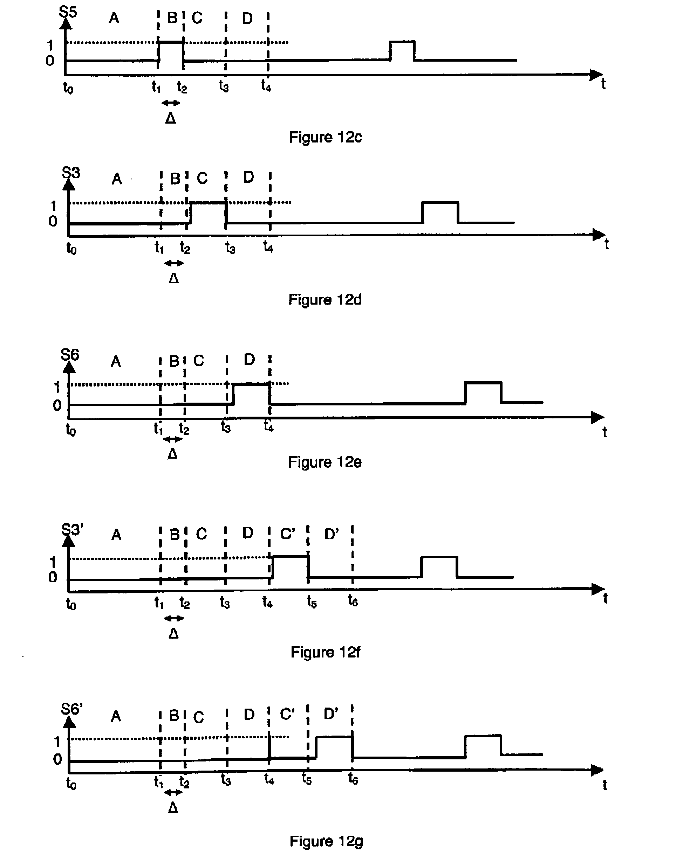

Comme illustré aux figures 7 et 12, dans une première période A, entre des instants t₀ et t₁, les premier 3, second 5 et troisième 6 interrupteurs électroniques sont ouverts, ils ne laissent pas passer de courant. Le quatrième 7 interrupteur électronique est fermé, il autorise donc le passage d'un courant. Durant cette première phase, le photodétecteur est polarisé et est prêt à fonctionner, le condensateur C2 n'est pas connecté ni au photodétecteur 1 ni au condensateur d'intégration C1. Aucun courant ne circule depuis le photodétecteur 1 vers les condensateurs tampon C2 et d'intégration C1.

Comme illustré aux figures 8 et 12, dans une seconde période B, entre des instants t₁ et t₂, les états des second 5 et quatrième 7 interrupteurs électroniques s'inversent, le quatrième 7 interrupteur électronique est maintenant ouvert, donc bloquant et le second interrupteur électronique 5 est maintenant fermé donc passant. Durant cette seconde période B, pendant une durée Δ très courte, le photodétecteur 1 délivre un courant intense représentatif de la scène observée. Le second interrupteur 5 étant fermé, un courant circule alors du photodétecteur 1 vers le condensateur tampon C2 qui se charge. Les états des premier 3 et troisième 6 interrupteurs sont inchangés. La période durant laquelle, le second interrupteur 5 est fermé et le quatrième interrupteur 7 est ouvert détermine la période de stockage du courant émis par le photodétecteur 1 dans le condensateur tampon C2.

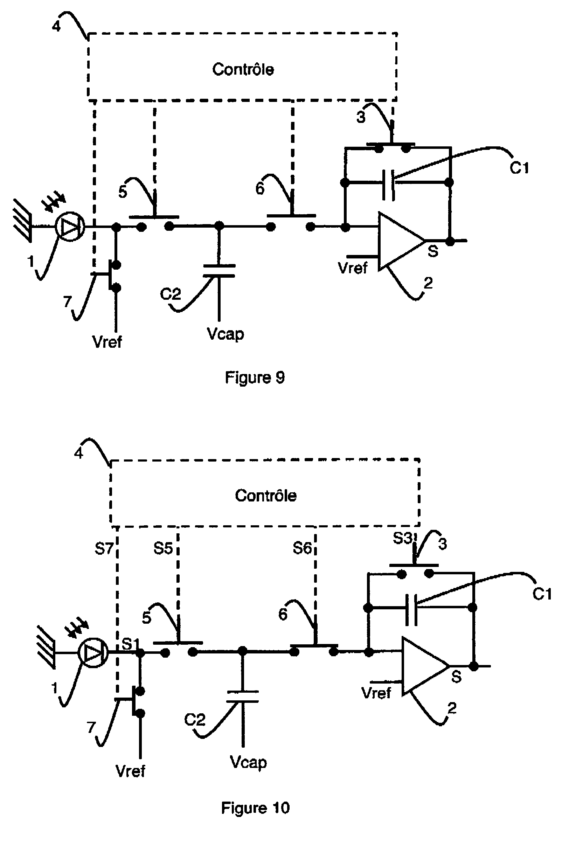

Comme illustré aux figures 9 et 12, à l'instant t₂, et jusqu'à un instant t₃ représentant la fin de la troisième période C, les états des second 5 et quatrième 7 interrupteurs électroniques s'inversent de nouveau, les second 5 et quatrième 7 interrupteurs électroniques redeviennent maintenant respectivement ouvert et fermé. Le condensateur tampon C2 n'est plus connecté au photodétecteur 1 et il n'est pas non plus connecté au condensateur C1. Durant cette période, la quantité de charge émise par le photodétecteur pendant la phase précédente B est stockée dans le condensateur C2. Il est également possible que le premier interrupteur électronique 3 change d'état peu de temps après l'instant t₂ ou alors à l'instant t₂. Durant cette phase, il y réinitialisation du condensateur d'intégration C1.

Comme illustré aux figures 10 et 12, à l'instant t₃ représentant le début d'une quatrième période D, le troisième interrupteur électronique 6 passe d'un état bloquant à un état passant. Ce changement d'état de l'interrupteur 6 permet une migration des charges du condensateur C2 vers le condensateur C1. Une fois le transfert des charges effectué depuis le condensateur C2 jusqu'au condensateur C1, la tension aux bornes du condensateur d'intégration C1 peut être mesurée sur la borne de sortie de l'amplificateur 2. La mesure de la tension aux bornes du condensateur d'intégration C1 est réalisée à la fin de la quatrième période D. Il est également possible qu'à l'instant t₃ ou juste après, le troisième interrupteur 6 passe de l'état bloqué à l'état passant.

Ce mode de fonctionnement est particulièrement avantageux car la phase d'acquisition des charges par le condensateur tampon C2 à partir du photodétecteur est décorrélée de la phase de comptage de ces charges, ou d'intégration, au moyen de l'amplificateur 2 qui mesure la différence de potentiel, représentative de ces charges, aux bornes du condensateur C1.

Un mode de réalisation comportant une mutualisation de l'amplificateur 2, du condensateur d'intégration C1 et du premier interrupteur électronique 3 est illustré à la figure 11. L'amplificateur 2 est connecté à deux pixels qui comportent chacun un condensateur tampon C2 et C2' et des second 5 et 5', troisième 6 et 6', quatrième 7 et 7' interrupteurs électroniques. Le circuit de commande 4 est alors connecté aux interrupteurs électroniques de chacun des pixels et au premier interrupteur électronique 3. Ainsi, un premier pixel est formé par le photodétecteur 1, le condensateur tampon C2, et les second 5, troisième 6 et quatrième 7 interrupteurs électroniques et un pixel additionnel est formé de la même manière par les éléments 1', C2', 5', 6' et 7'.

Dans le cas d'une mutualisation de l'amplificateur, la pluralité de pixels réalise simultanément l'acquisition de la scène observée pendant une très courte durée au moyen des condensateurs tampons C2 et C2'. Pendant les périodes A et B, les interrupteurs électroniques 5 et 5' et 7 et 7' ont des basculements identiques qui sont représentés par les mêmes signaux notés respectivement S5 et S7 des figures 12c et 12b. Pendant le reste de la période d'acquisition, entre l'instant t₂ et un nouvel instant t₀, les charges sont déplacées successivement de chaque condensateur C2 sur le condensateur d'intégration C1 qui effectue alors une mesure pour chaque pixel, c'est-à-dire pour chaque quantité de charge stockée par le condensateur C2.

Entre les instants t₂ et t₃, c'est-à-dire pendant la période C, il y a initialisation du condensateur C1. Entre les instants t₃ et t₄, c'est-à-dire pendant la période D, il y a transfert des charges du condensateur tampon C2 vers le condensateur d'intégration C1 pour permettre la mesure des charges intégrées dans le premier pixel. Entre les instants t₂ et t₄, le pixel additionnel ne change pas d'état et le condensateur tampon C2' est avantageusement déconnecté du photodétecteur 1' et de l'amplificateur 2. Entre les instants t₂ et t₄, le troisième interrupteur électronique 6' est dans un état bloquant et le second interrupteur électronique 5' est avantageusement à l'état bloquant.

Entre les instants t₄ et t₅, c'est-à-dire pendant la période C', il y a initialisation du condensateur C1 pour éliminer les charges qui proviennent du condensateur C2. Entre les instants t₅ et t₆, c'est-à-dire pendant la période D', il y a transfert des charges du condensateur tampon C2' vers le condensateur d'intégration C1 pour permettre la mesure des charges intégrées dans le pixel additionnel. Comme précédemment, pour éviter tout phénomène de charge parasite du condensateur tampon C2 hors de sa période de charge ou de sa période de transfert des charges électriques, le troisième interrupteur électronique 6 est dans un état bloquant et le second interrupteur électronique 5 est avantageusement à l'état bloquant entre les instants t₄ et t₆.

Dans le mode de réalisation illustré à la figure 11, seuls deux pixels sont représentés, mais il est possible de mutualiser l'amplificateur 2 et ses éléments associés à un plus grand nombre de pixels.

La connexion entre l'amplificateur 2 et les pixels peut être réalisée, par exemple, au moyen du troisième interrupteur 6 ou au moyen d'interrupteurs additionnels qui permettent de connecter l'amplificateur 2 indépendamment à l'un des multiples pixels.

On a alors durant l'acquisition, une succession de phases C et D, où chaque couple de phases C et D est associé à un pixel et donc à un condensateur C2. Bien entendu, on a une réinitialisation du condensateur C1 entre deux mesures des charges d'un condensateur C2.

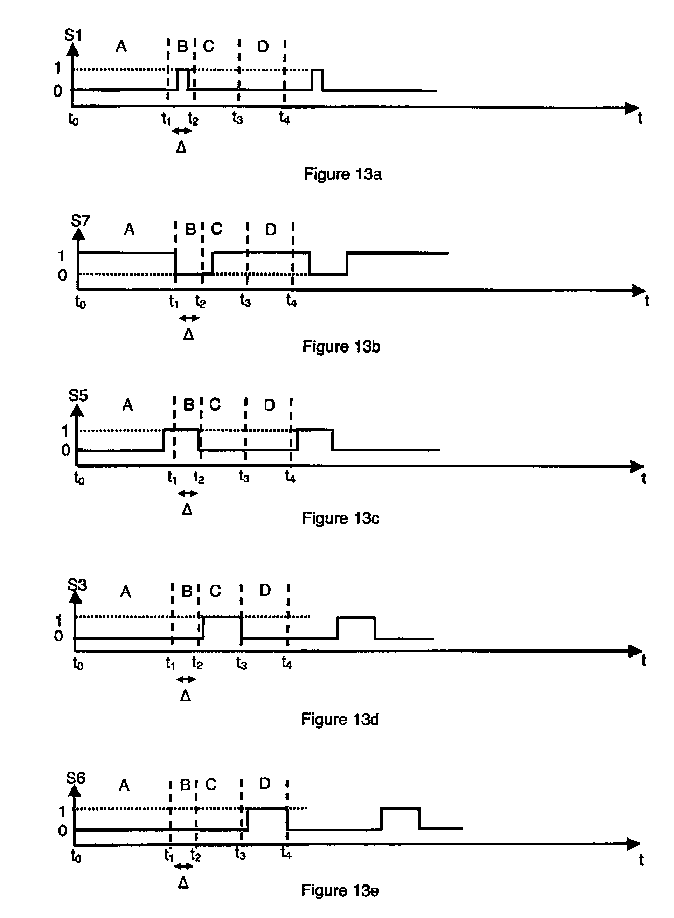

Comme illustré aux figures 13 à 15, il est également possible de décaler les commutations des différents interrupteurs entre eux de manière à rendre plus robuste le fonctionnement ou pour prendre compte des retards possibles dans les basculements des interrupteurs. D'une manière générale, l'instant t₁ correspond au basculement du quatrième transistor 7 d'un état passant à un état bloquant. L'instant t₂ correspond au basculement du second interrupteur électronique 5 d'un état passant à un état bloquant. L'instant t₃ correspond au basculement du premier transistor 3 d'un état passant à un état bloquant. L'instant t₄ correspond au basculement du troisième transistor 6 d'un état passant à un état bloquant. Cependant, il est nécessaire que pendant la durée Δ, les second 5 et quatrième 7 soient dans des états opposés.

Comme illustré à la figure 13, le quatrième interrupteur électronique 7 peut basculer de l'état bloqué à l'état passant après l'instant t₂ mais avant l'instant t₃. Il est également possible que le basculement de l'état bloqué à l'état passant du second interrupteur 5 soit réalisé avant l'instant t₁. D'une manière générale, le basculement de l'interrupteur électronique 7 doit être réalisé entre les instants t₂ et t₄ mais toujours avant un nouvel instant t₁ pour avoir un photodétecteur 1 polarisé pour la durée Δ.

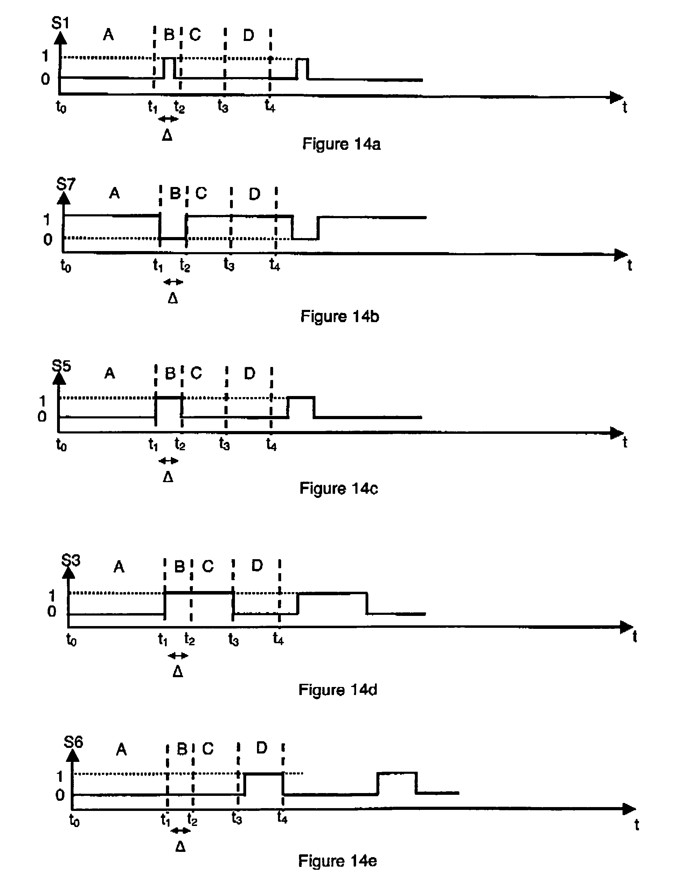

Comme illustré aux figures 14 et particulièrement à la figure 14d, le premier interrupteur électronique 3 peut basculer de l'état bloqué à l'état passant avant l'instant t₂, et plus précisément à l'instant t₁.

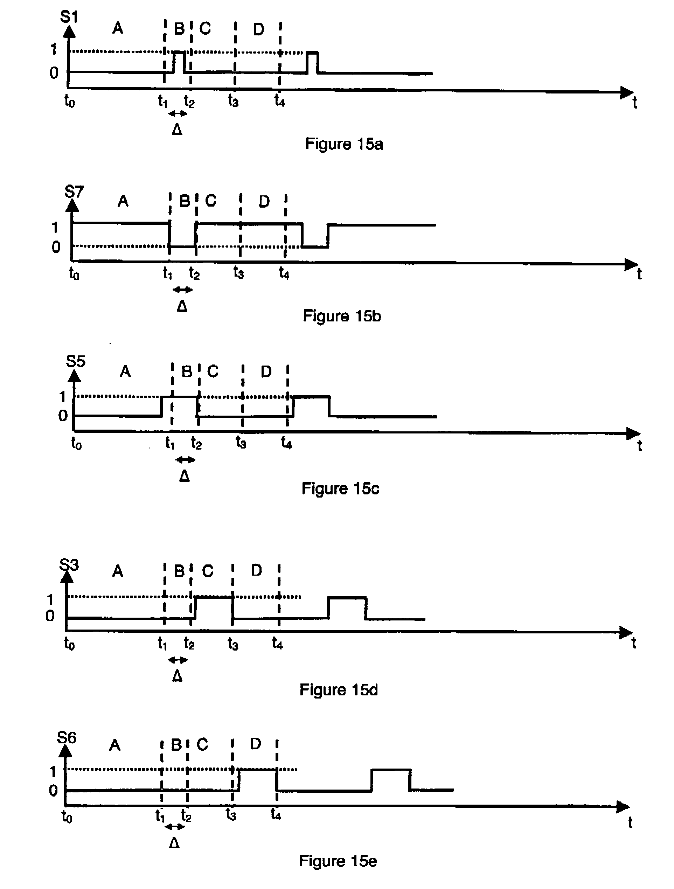

Comme illustré aux figures 15a à 15e, dans un nouveau mode de fonctionnement, il est possible de combiner les ouvertures/fermetures du second interrupteur électronique 5 de la figure 13c avec ceux des figures 12a, b d et e pour les autres interrupteurs électroniques. D'une manière générale, il est nécessaire que le basculement de l'état bloqué à l'état passant intervienne avant t₁ pour le second interrupteur électronique 5.

Le condensateur d'intégration C1, est sensiblement identique à celui utilisé dans l'art antérieur. Il présente une capacité électrique faible afin de permettre une bonne mesure du courant délivré en fournissant à ses bornes une tension élevée.

L'utilisation d'un condensateur tampon supplémentaire permet de conserver les performances générales du circuit, notamment, en termes de linéarité et de bruit car les caractéristiques du condensateur C1 d'intégration ont été conservées. De plus, au moyen du condensateur C2 tampon, un composant passif, du troisième interrupteur 6 et du quatrième 7 interrupteur électronique, il n'est pas nécessaire de fournir une grande quantité d'énergie au circuit et surtout à l'amplificateur 2 pour gérer un flux de courant important et bref issu du photodétecteur dans le circuit.

La fréquence d'acquisition du circuit est inchangée. Bien que le photodétecteur 1 ne délivre un courant que pendant une courte durée de la période d'acquisition, le reste de cette période est utilisé pour transférer les charges électriques du condensateur tampon C2 vers le condensateur d'intégration C1 et pour mesurer la différence de potentiel aux bornes du condensateur C1.

Le quatrième 7 interrupteur électronique ne doit jamais passer de l'état bloqué à l'état passant avant le passage de l'état passant à l'état bloqué du deuxième interrupteur 5 afin d'éviter toute perte de charge électrique.

Bien que ce circuit soit particulièrement avantageux pour une utilisation de type active, c'est-à-dire lorsque que le photodétecteur émet un signal intense pendant une très courte période, ce circuit peut également être utilisé pour des applications passives dans lesquelles le photodétecteur émet un courant faible pendant une durée longue, typiquement plusieurs millisecondes.

## Revendications

1. Circuit d'acquisition comportant :
- un amplificateur (2) muni d'une borne d'entrée et d'une borne de sortie,
- un condensateur d'intégration (C1) et un premier interrupteur (3) connectés en parallèle entre la borne d'entrée et la borne de sortie dudit amplificateur (2),
- au moins deux pixels connectés à la borne d'entrée, chaque pixel comportant :
- un photodétecteur (1),
- des second (5) et troisième (6) interrupteurs électroniques connectés en série entre le photodétecteur (1) et la borne d'entrée de l'amplificateur (2), les second (5) et troisième (6) interrupteurs électroniques ayant une borne commune,
- un condensateur tampon (C2) connecté à ladite borne commune, la capacité électrique du condensateur tampon (C2) étant au moins égale à celle du condensateur d'intégration (C1),
- un quatrième interrupteur électronique (7) connecté entre une source de tension de référence (Vref) et le photodétecteur (1)
- un circuit de commande configuré de manière à ce que, dans une première période, les condensateurs tampons (C2, C2') des deux pixels reçoivent, au moyen des seconds interrupteurs (5, 5'), le signal émis par leur photodétecteur (1) associé, pour obtenir l'acquisition simultané d'une scène observée et à ce que les signaux stockés dans les condensateurs tampons (C2, C2') soient transférés successivement de chaque condensateur tampon (C2, C2') sur le condensateur d'intégration (C1) pour effectuer une mesure de charge de chaque pixel.

2. Circuit selon la revendication 1, **caractérisé en ce que** la capacité électrique du condensateur tampon (C2) est comprise entre deux fois et dix fois la capacité électrique du condensateur d'intégration (C1).

3. Circuit selon l'une des revendications 1 et 2, **caractérisé en ce que** les quatrièmes interrupteurs (7, 7') sont reliés à une première ligne de commande et **en ce que** les seconds interrupteurs (5, 5') sont reliés à une seconde ligne de commande.

4. Circuit selon l'une quelconque des revendications 1 à 3, **caractérisé en ce qu'**il comporte des moyens de déplacement successif des charges stockées dans chaque condensateur tampon (C2, C2') vers le condensateur d'intégration (C1).

5. Procédé d'acquisition **caractérisé en ce qu'**il comporte:
- prévoir un circuit d'acquisition comportant des premier et second pixels connectés à une borne d'entrée d'un amplificateur (2), un condensateur d'intégration (C1) et un premier interrupteur (3) connectés en parallèle entre la borne d'entrée et une borne de sortie dudit amplificateur (2), les premier et second pixels comportant chacun un photodétecteur (1) relié à un condensateur tampon (C2, C2'),
- stocker les charges émises par les photodétecteurs (1) dans les condensateurs tampons (C2, C2'), au moyen des seconds interrupteurs (5, 5'), pour obtenir l'acquisition simultané d'une scène observée par les deux pixels,
- transférer successivement les charges stockées de chaque condensateur tampon (C2, C2') sur le condensateur d'intégration (C1) pour effectuer une mesure de charge de chaque pixel, le condensateur d'intégration (C1) étant vidé entre deux transferts de charge successifs.

6. Procédé selon la revendication 5, **caractérisé en ce qu'**il comporte la fermeture d'un premier interrupteur (3) connecté en parallèle aux bornes du condensateur d'intégration (C1) pour le vider.

7. Procédé selon l'une des revendications 5 et 6, **caractérisé en ce qu'**il comporte l'ouverture et la fermeture simultanée des seconds interrupteurs (5, 5') des premier et second pixels reliant chacun le photodétecteur (1) au condensateur tampon (C2, C2').

8. Procédé selon l'une quelconque des revendications 5 à 7, **caractérisé en ce que** le transit des charges des condensateurs tampon (C2, C2') vers le condensateur d'intégration (C1) est réalisé par la fermeture de troisièmes interrupteurs (6, 6') reliant le condensateur tampon (C2) à la borne d'entrée de l'amplificateur (2).

9. Procédé selon l'une quelconque des revendications 5 à 7, **caractérisé en ce qu'**il comporte l'ouverture et la fermeture simultanées des quatrièmes transistors (7, 7') des premier et second pixels reliant chacun le photodétecteur (1) à une tension de référence (Vref).

10. Procédé selon la revendication 9 **caractérisé en ce que** la durée de fermeture des seconds interrupteurs (5) et d'ouverture simultanée des quatrièmes (7) interrupteurs est inférieure à une microseconde

11. Procédé selon la revendication 10 **caractérisé en ce que** la durée de fermeture des seconds interrupteurs (5) et d'ouverture simultanée des quatrièmes (7) interrupteurs est comprise entre 50 et 100ns.

## Claims

1. An acquisition circuit comprising:
- an amplifier (2) provided with an input terminal and an output terminal,
- an integration capacitor (C1) and a first switch (3) connected in parallel between the input terminal and the output terminal of said amplifier (2),
- at least two pixels connected to the input terminal, each pixel comprising:
- a photodetector (1),
- second (5) and third (6) electronic switches connected in series between the photodetector (1) and the input terminal of the amplifier (2), the second (5) and third (6) electronic switches having a common terminal,
- a buffer capacitor (C2) connected to said common terminal, the electric capacitance of the buffer capacitor (C2) being at least equal to that of the integration capacitor (C1),
- a fourth electronic switch (7) connected between a reference voltage source (Vref) and the photodetector (1)
- a control circuit configured in such a way that, in a first period, the buffer capacitors (C2, C2') of the two pixels receive the signal emitted by their associated photodetector (1), by means of the second switches (5, 5'), to obtain simultaneous acquisition of an observed scene and that the signals stored in the buffer capacitors (C2, C2') are successively transferred from each buffer capacitor (C2, C2') to the integration capacitor (C1) to perform measurement of the charge of each pixel.

2. The circuit according to claim 1, **characterized in that** the electric capacitance of the buffer capacitor (C2) is comprised between twice and ten times the electric capacitance of the integration capacitor (C1).

3. The circuit according to one of claims 1 and 2, **characterized in that** the fourth switches (7, 7') are connected to a first control line and that the second switches (5, 5') are connected to a second control line.

4. The circuit according to any one of claims 1 to 3, **characterized in that** it comprises means for successive displacement of the charges stored in each buffer capacitor (C2, C2') to the integration capacitor (C1).

5. An acquisition method **characterized in that** it comprises:
- providing an acquisition circuit comprising first and second pixels connected to an input terminal of an amplifier (2), an integration capacitor (C1) and a first switch (3) connected in parallel between the input terminal and an output terminal of said amplifier (2), the first and second pixels each comprising a photodetector (1) linked to a buffer capacitor (C2, C2'),
- storing the charges emitted by the photodetectors (1) in the buffer capacitors (C2, C2'), by means of the second switches (5, 5'), to obtain simultaneous acquisition of a scene observed by the two pixels,
- successively transferring the stored charges from each buffer capacitor (C2, C2') to the integration capacitor (C1) to perform measurement of the charge of each pixel, the integration capacitor (C1) being emptied between two successive charge transfers.

6. The method according to claim 5, **characterized in that** it comprises closing of a first switch (3) connected in parallel to the terminals of the integration capacitor (C1) to empty it.

7. The method according to one of claims 5 and 6, **characterized in that** it comprises simultaneous opening and closing of the second switches (5, 5') of the first and second pixels each connecting the photodetector (1) to the buffer capacitor (C2, C2').

8. The method according to any one of claims 5 to 7, **characterized in that** transit of the charges from the buffer capacitors (C2, C2') to the integration capacitor (C1) is performed by closing of third switches (6, 6') linking the buffer capacitor (C2) to the input terminal of the amplifier (2).

9. The method according to any one of claims 5 to 7, **characterized in that** it comprises simultaneous opening and closing of the fourth transistors (7, 7') of the first and second pixels each linking the photodetector (1) to a reference voltage (Vref).

10. The method according to claim 9, **characterized in that** the duration of closing of the second switches (5) and of simultaneous opening of the fourth (7) switches is less than one microsecond.

11. The method according to claim 10, **characterized in that** the duration of closing of the second switches (5) and of simultaneous opening of the fourth (7) switches is comprised between 50 and 100ns.

## Patentansprüche

1. Erfassungsschaltung, die umfasst:
- einen Verstärker (2), der mit einer Eingangs- und einer Ausgangsklemme versehen ist,
- einen Integrations-Kondensator (C1) und einen ersten Schalter (3), die zwischen der Eingangs- und der Ausgangsklemme des Verstärkers (2) parallelgeschaltet sind,
- mindestens zwei Pixel, die an die Eingangsklemme gelegt sind, wobei jedes Pixel umfasst:
- eine Fotozelle (1)
- einen zweiten (5) und dritten (6) Elektronikschalter, die in Serie geschaltet sind zwischen der Fotozelle (1) und der Eingangsklemme des Verstärkers (2), wobei der zweite (5) und der dritte (6) Elektronikschalter eine gemeinsame Klemme haben,
- einen Pufferkondensator (C2), der an die genannte gemeinsame Klemme gelegt ist, wobei die Kapazität des Pufferkondensators (C2) mindestens gleich derjenigen des Integrations-Kondensators (C1) ist,
- einen vierten Elektronikschalter (7), der zwischen eine ReferenzSpannungsquelle (Vref) und die Fotozelle (1) geschaltet ist,
- eine Steuerschaltung, die so konfiguriert ist, dass in einer ersten Zeiteinheit die Pufferkondensatoren (C2, C2') der beiden Pixel mit Hilfe der zweiten Schalter (5, 5') das von der zugehörigen Fotozelle (1) erzeugte Signal empfangen, um die gleichzeitige Erfassung einer beobachteten Szene zu empfangen, und damit die in den Pufferkondensatoren (C2, C2') gespeicherten Signale nacheinander von jedem Pufferkondensator (C2, C2') an den Integrations-Kondensator (C1) übertragen werden, damit eine Ladungsmessung jedes Pixels erfolgen kann.

2. Schaltung nach Anspruch 1, **dadurch gekennzeichnet, dass** die Kapazität des Pufferkondensators (C2) zwei- bis zehnfach so hoch ist wie die Kapazität des Integrations-Kondensators (C1).

3. Schaltung nach einem der Ansprüche 1 und 2, **dadurch gekennzeichnet, dass** die vierten Schalter (7, 7') an eine erste Steuerleitung und die zweiten Schalter (5, 5') an eine zweite Steuerleitung gelegt sind.

4. Schaltung nach einem der Ansprüche 1 bis 3, **dadurch gekennzeichnet, dass** sie Mittel zur sukzessiven Verlagerung der in jedem Pufferkondensator gespeicherten Ladungen (C2, C2') zum Integrations-Kondensator (C1) umfasst.

5. Erfassungsverfahren, das **dadurch gekennzeichnet ist, dass** es umfasst:
- Anordnen einer Erfassungsschaltung, die ein erstes und zweites Pixel umfasst, die an eine Eingangsklemme eines Verstärkers (2) gelegt sind, einen Integrations-Kondensator (C1) und einen ersten Schalter (3), die zwischen der Eingangs- und einer Ausgangsklemme des Verstärkers (2) parallelgeschaltet sind, wobei erstes und zweites Pixel jeweils eine Fotozelle (1) umfassen, die an einen Pufferkondensator (C2, C2') gelegt ist,
- Speichern der von den Fotozellen (1) abgegebenen Ladungen in den Pufferkondensatoren (C2, C2') mittels der zweiten Schalter (5, 5'), um die zeitgleiche Erfassung einer durch die beiden Pixel beobachteten Szene zu erreichen,
- sukzessive Übertragung der gespeicherten Ladungen jedes Pufferkondensators (C2, C2') zum Integrations-Kondensator (C1), um eine Ladungsmessung jedes Pixels durchzuführen, wobei der Integrations-Kondensator (C1) zwischen zwei aufeinanderfolgenden Ladungsübertragungen geleert wird.

6. Verfahren nach Anspruch 5, **dadurch gekennzeichnet, dass** es die Schließung eines ersten Schalters (3) umfasst, der an die Klemmen des Integrations-Kondensators (C1) parallelgeschaltet ist, um ihn zu leeren.

7. Verfahren nach einem der Ansprüche 5 und 6, **dadurch gekennzeichnet, dass** es das zeitgleiche Öffnen und Schließen der zweiten Schalter (5, 5') des ersten und zweiten Pixels umfasst, die jeweils die Fotozelle (1) an den Pufferkondensator (C2, C2') legen.

8. Verfahren nach einem der Ansprüche 5 bis 7, **dadurch gekennzeichnet, dass** die Übertragung der Ladungen des Pufferkondensators (C2, C2') zum Integrations-Kondensator (C1) durch Schließen dritter Schalter (6, 6') erfolgt, die den Pufferkondensator (C2) an die Eingangsklemme des Verstärkers (2) legen.

9. Verfahren nach einem der Ansprüche 5 bis 7, **dadurch gekennzeichnet, dass** es das zeitgleiche Öffnen und Schließen der vierten Schalter (7, 7') des ersten und zweiten Pixels umfasst, die jeweils die Fotozelle (1) an eine Referenzspannung (Vref) legen.

10. Verfahren nach Anspruch 9, **dadurch gekennzeichnet, dass** die Dauer des Schließens der zweiten Schalter (5) und des zeitgleichen Öffnens der vierten (7) Schalter unter einer Mikrosekunde liegt.

11. Verfahren nach Anspruch 10, **dadurch gekennzeichnet, dass** die Dauer des Schließens der zweiten Schalter (5) und des zeitgleichen Öffnens der vierten (7) Schalter 50 bis 100 ns beträgt.
